# EUROPÄISCHE PATENTSCHRIFT

(11) **EP 0 608 806 B1**
(45) Veröffentlichungstag und Bekanntmachung des Hinweises auf die Patenterteilung: **11.09.1996**
(21) Anmeldenummer: 94100966.4
(22) Anmeldetag: 24.01.1994
(51) Int. Cl.: G21C 17/003, G21C 13/036, G21C 11/02

(54) **Verfahren und Vorrichtung zum Prüfen, Reparieren oder Austauschen der den Boden eines Reaktordruckbehälters durchdringenden Stutzen**
Method and installation for inspecting, repairing or replacing the tubes penetrating through the bottom head of a reactor vessel
Procédé et installation pour le contrôle, la réparation ou le remplacement des tubulures traversant le fond d'une cuve de réacteur

(30) Priorität: 28.01.1993 DE 4302330
(43) Veröffentlichungstag der Anmeldung: 03.08.1994
(73) Patentinhaber: ABB Reaktor GmbH, D-68167 Mannheim (DE)
(72) Erfinder: Pötz, Franz, D-64646 Heppenheim (DE); Russ, Jakob, D-67354 Römerberg (DE)
(74) Vertreter: Rupprecht, Klaus, Dipl.-Ing.

(56) Entgegenhaltungen:
- DE-C- 3 338 520
- PATENT ABSTRACTS OF JAPAN, vol. 14, no. 321 (P-1074)(4246) 10. Juli 1990 & JP-A-02 105 097

## Beschreibung

Die Erfindung betrifft ein Verfahren zum Prüfen, Reparieren oder Austauschen der den Boden eines Reaktordruckbehälters durchdringenden und der Einführung jeweils einer Sonde einer Innenkerninstrumentierung eines wassergekühlten Kernreaktors dienenden Stutzen.

Abhängig von Leistung und Bauart des Kernreaktors durchsetzen den Boden des Reaktordruckbehälters eine mehr oder weniger große Anzahl (ca. 50) von Stutzen. Die an ihren freien Endbereichen mit Detektoren bestückten Sonden sind während des Reaktorbetriebes in die Brennelemente eingefahren. Sie unterliegen daher einer hohen radioaktiven Bestrahlung. Ist ein Prüfen, ein Reparieren oder ein Austauschen von Stutzen erforderlich, werden die Brennelemente des Reaktorkerns und sämtliche Kerneinbauten aus dem Reaktordruckbehälter entfernt. Vor der Herausnahme der Brennelemente müssen die in Kanälen der Brennelemente verfahrbaren Sonden der Innenkerninstrumentierung nach außerhalb in den von den Stutzen wegführenden Führungsrohren geparkt werden. Da die Detektoren wegen ihres Einsatzes in dem Reaktorkern stark kontaminiert sind, ist eine unerwünschte radioaktive Belastung die Folge.

Es stellt sich die Aufgabe, ein Verfahren der eingangs genannten Art anzugeben, bei dem die radioaktive Belastung durch die Detektoren der Innenkerninstrumentierung erheblich reduziert wird.

Gelöst wird diese Aufgabe erfindungsgemäß durch die im Kennzeichen des Anspruchs 1 angegebenen Schritte.

Während der Bearbeitung eines einem Schacht zugeordneten Stutzens befinden sich die restlichen Sonden im Abschirmbereich des Abschirmbehälters, so daß sich die radioaktive Belastung innerhalb und außerhalb des Druckbehälters erheblich verringert. Mit dem Verfahren gelingt eine Integrierung der Abschirm- und Bearbeitungsvorgänge.

Ein bevorzugtes Verfahren zur Reparatur eines Stutzens ist im Anspruch 2 angegeben.

Eine Vorrichtung zur Durchführung des Verfahrens zeichnet sich dadurch aus, daß mehrere zusammen den Querschnitt des Reaktordruckbehälters ausfüllende Abschirmbehälter mit ihrem Tragflansch am Reaktordruckbehälterflansch abgestützt sind, wobei die Bodenplatten der Abschirmbehälter oberhalb der Stutzen enden, daß die Bodenplatte wenigstens eines Abschirmbehälters von mehreren Schächten durchsetzt ist, die die im entsprechenden Teilquerschnitt des Reaktordruckbehälters befindlichen Stutzen übergreifen, daß in jeden Schacht eine wassergefüllte Kassette einsetzbar ist, in deren oberhalb des jeweiligen Stutzens endenden Boden wenigstens ein Rohr zur Aufnahme der Sonde eingelassen ist, das mit seinem geschlossenen Ende ein vorgebbares Maß in die Kassette hineinragt und mit seinem offenen Ende an den Stutzen angrenzt, daß in den nicht von Schächten durchsetzten Bodenplatten der restlichen Abschirmbehälter Rohre zur Aufnahme der Sonden eingelassen sind, die mit ihren geschlossenen Enden ein vorgebbares Maß in den Abschirmbehälter ragen und mit ihren offenen Enden an die vom Abschirmbehälter abgekehrten Stutzen grenzen, und daß jeder Schacht Mittel zur Führung eines im Schacht verfahrbaren Trägers zur Aufnahme von Prüfgeräten und/oder Werkzeugen aufweist.

Die Rohre entsprechen in ihrer lichten Weite etwa derjenigen der Stutzen, so daß sie als Führungsrohre für die Sonden dienen und deren mit den Detektoren bestückte freien Enden problemlos in den Abschirmbereich des Abschirmbehälters gelangen. In der Regel wird der Querschnitt des Reaktordruckbehälters durch vier je etwa einen Viertelkreissektor umfassenden Abschirmbehälter abgedeckt. Ist nur ein Viertelkreissektor mit Schächten versehen, so kann nach Abschluß der Arbeiten in einem Reaktordruckbehälter-Sektor ein Verdrehen der Abschirmbehälter um 90° erfolgen, um die Stutzen des nächsten Reaktordruckbehälter-Sektors zu bearbeiten. In den Schächten, die gerade nicht für den Träger zur Aufnahme von Prüfgeräten oder Werkzeugen zugänglich sind, übernimmt eine wassergefüllte Kassette die Abschirmaufgabe. Somit wurde eine Vorrichtung geschaffen, bei der die Bearbeitung und die Abschirmung in kompakter Bauweise vereinigt sind.

Die Mittel zur Führung des Trägers sind vorzugsweise dem unterhalb der jeweiligen Kassette beginnenden Schachtbereich zugeordnet.

Damit ziehen die Führungsmittel keine Querschnittsverringerung der Kassetten und somit keine Reduzierung der Abschirmwirkung nach sich.

In vorteilhafter Weise sind die Führungsmittel Schienen, an welchen der Träger festklemmbar ist.

Zur Lokalisierung der innerhalb eines Schachtes anfallenden Späne ist zwischen dem Reaktordruckbehälterboden und der Schachtunterkante ein Dichtelement angordnet.

Anhand eines Ausführungsbeispiels und der schematischen Figuren 1 bis 4 wird das erfindungsgemäße Verfahren und eine Vorrichtung zur Durchführung des Verfahrens beschrieben.

Es zeigt die
- Fig. 1: den Längsschnitt durch einen Reaktordruckbehälter mit einer Prüf-, Reparatur- oder Ausbauvorrichtung,
- Fig. 2: eine Aufsicht der Figur 1 in einem anderen Maßstab,
- Fig. 3: einen Querschnitt durch eine andere Schacht- und Kassettenausbildung und
- Fig. 4: einen nach dem Verfahren reparierten Stutzen.

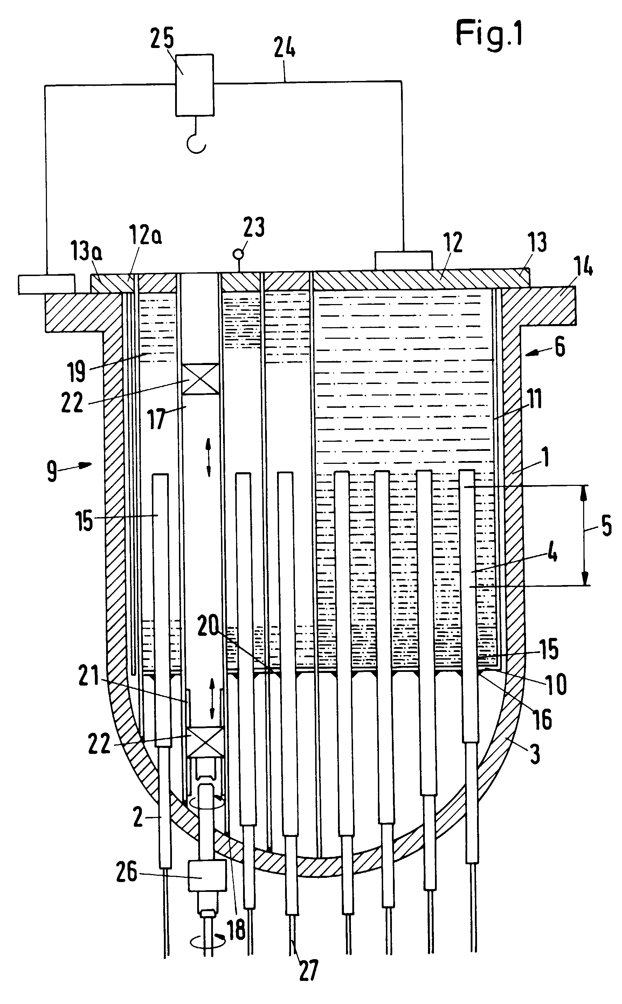

Die Figur 1 zeigt in einer schematischen Darstellung einen Querschnitt durch einen Reaktordruckbehälter 1, aus dem der Reaktorkern und alle weiteren Kerneinbauten entfernt sind. Eine Vielzahl von Stutzen 2 durchsetzen den kalottenförmigen Boden 3 des Reaktordruckbehälters. Aus Gründen einer deutlicheren Darstellung sind nur wenige Stutzen 2 eingezeichnet, obwohl tatsächlich ca. 50 Stutzen vorhanden sind. Die Stutzen dienen beim Betrieb der Reaktoranlage der Einführung von Sonden 4 der sogenannten Innenkerninstrumentierung in den nicht dargestellten Reaktorkern. An ihren freien Endbereichen 5 sind die Sonden mit nicht dargestellten Detektoren zur Ermittlung der Kerndaten bestückt.

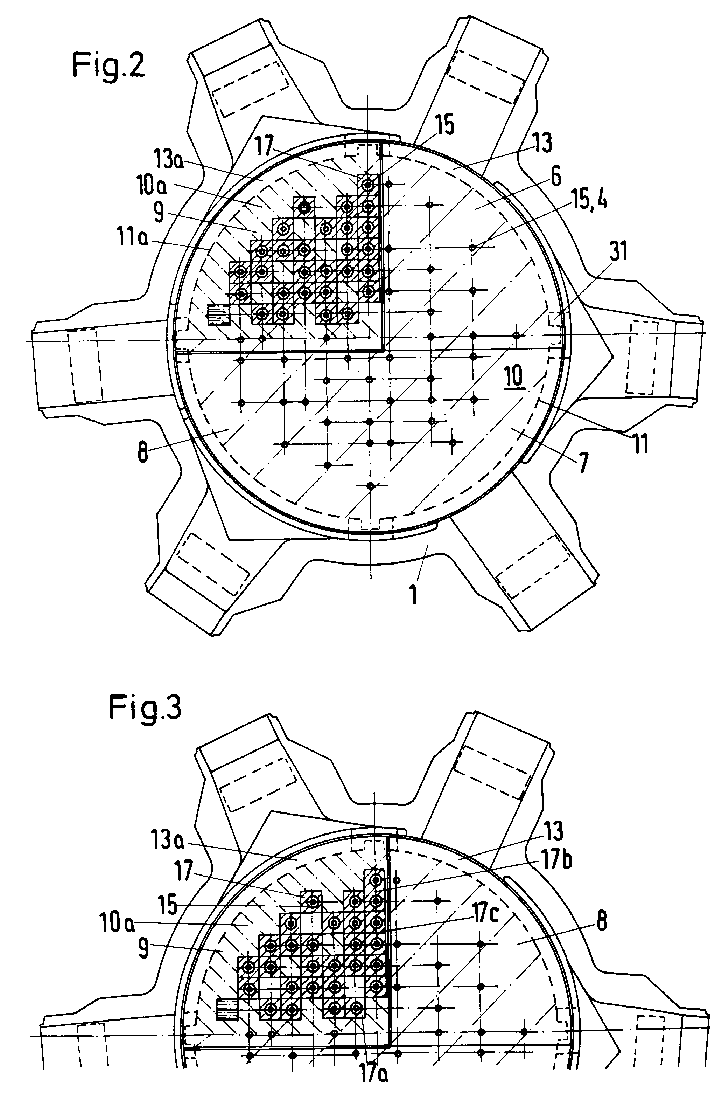

Stellt sich bei der in bestimmten Zeitabständen stattfindenden Revision der Stutzen heraus, daß eine Reparatur oder ein Austausch von Stutzen erforderlich ist, werden vier Abschirmbehälter 6, 7, 8, 9 in den Reaktordruckbehälter 1 eingesetzt (siehe auch Figur 2). Die Abschirmbehälter enthalten in der Regel Wasser als Abschirmmedium und entsprechen in ihrem Querschnitt etwa einem Viertelkreissektor, so daß sie zusammen den Reaktordruckbehälter-Innenquerschnitt abdecken. Drei Abschirmbehälter 6, 7, 8 bestehen aus einer viertelkreisförmigen Bodenplatte 10, von deren Kontur senkrecht nach oben auskragende Seitenwände 11 wegführen. Den Abschluß der Abschirmbehälter 6, 7, 8 bildet eine Deckplatte 12, die an ihrer der Reaktordruckbehälter-Peripherie zugewandten Seite als Tragflansch 13 ausgebildet ist. Über diesen Tragflansch sind die Abschirmbehälter 6, 7, 8 am Reaktordruckbehälter-Flansch 14 abgestützt und erstrecken sich im eingesetzten Zustand mit ihrer Bodenplatte etwa bis zum Übergang der zylindrischen Reaktordruckbehälter-Wand zum kalottenförmigen Boden 3. In die Bodenplatte 10 sind Rohre 15 eingelassen und mit je einer Schweißnaht 16 festgelegt. Die Rohre 15 erstrecken sich mit ihren offenen Enden bis zu den Stutzen 2, wobei jeder Stutzen eines Viertelkreissektors des Bodens 3 von einem Rohr konzentrisch übergriffen wird. Das geschlossene Ende eines jeden Rohres 15 ragt soweit in den jeweiligen Abschirmbehälter 6, 7, 8 hinein, daß eine Sonde 4 mit ihrem freien Endbereich 5 im Abschirmbereich des Abschirmbehälters angeordnet ist. Die eingenommene Position entspricht in der Regel der Sondenposition beim Betrieb der Reaktoranlage.

Die Bodenplatte 10a des Abschirmbehälters 9 ist, wie aus der in einem anderen Maßstab dargestellten Figur 2 ersichtlich, von Schächten 17 durchsetzt. Dabei wird jeder Stutzen 2 des entsprechenden Reaktordruckbehälter-Viertelkreisquerschnitts von einem Schacht koaxial übergriffen. Zwischen der Schachtunterkante und dem kalottenförmigen Boden 3 ist ein Dichtelement 18 angeordnet, so daß beim Bearbeiten des Stutzens die Späne in einem kontrollierbaren Bereich verbleiben und leicht abgesaugt werden können. Mit seinem oberen Ende ist jeder Schacht 17 in eine Deckplatte 12a eingelassen, wobei jedoch sein Öffnungsquerschnitt frei bleibt. Zwischen der Bodenplatte 10a und der Deckplatte 12a erstrecken sich Seitenwände 11a, so daß ein geschlossener Abschirmbehälter 9 entsteht, dessen Innenraum von den Schächten und dem die Schächte ganz oder teilweise umgebenden Abschirmmedium Wasser ausgefüllt ist. Gegebenenfalls kann ein Teil einer Seitenwand 11a aus den aneinandergereihten Schächten 17 selbst bestehen. Die Deckplatte 12a ist ebenso wie die Deckplatte 12 der Abschirmbehälter 6, 7, 8 an ihrer der Reaktordruckbehälter-Peripherie zugewandten Seite als Tragflansch 13a zum Abstützen des Abschirmbehälters 9 an dem Reaktordruckbehälter-Flansch 14 ausgebildet.

In jeden Schacht 17 ist eine wassergefüllte, allseits geschlossene Kassette 19 unter Einhaltung eines geringen seitlichen Spiels zur Schachtwand eingesetzt und am oberen Schachtrand abgestützt. Der Kassettenboden 20 erstreckt sich etwa bis zur Ebene der Bodenplatte 10a. In den Kassettenboden 20 ist ein Rohr 15 in gleicher Weise eingelassen, wie in der Bodenplatte 10 der Abschirmbehälter 6, 7, 8. Es übergreift ebenso einen Stutzen 2, so daß die Sonde 4 in gleicher Weise im Abschirmbereich des Abschirmbehälters 9 angeordnet werden kann.

Jeder Schacht 17 weist unterhalb der Kassette 19 eine Schiene 21 zur Längsführung und gegebenenfalls zur Arretierung eines Trägers 22 auf, der zur Aufnahme von Prüfgeräten und/oder Bearbeitungswerkzeugen dient. Soll ein bestimmter Stutzen inspiziert, repariert oder ausgetauscht werden, wird die dem Stutzen zugeordnete Sonde 4 nach außerhalb des Reaktordruckbehälters verfahren und die Kassette 19 des entsprechenden Schachtes mit Hilfe eines nicht dargestellten, an einem Anschlagmittel 23 der Kassette angreifenden Hebezeugs entfernt. Mit Hilfe eines Traggestells 24 und einer demselben zugeordneten Seilwinde 25 wird in den freigelegten Schacht 17 der Träger 22 eingeführt und an den Schienen 21 relativ zum Stutzen 2 festgelegt. Während die Prüfung und die zur Reparatur des Stutzens erforderliche Bearbeitung von innerhalb des Reaktordruckbehälters erfolgen kann, ist für den Austausch des Stutzens zusätzlich ein von der Außenseite des Reaktordruckbehälters angreifender Werkzeugträger 26 erforderlich. Die Reaktordruckbehälterwand weist Vorsprünge 31 auf, die als Zentrierhilfe für die Abschirmbehälter eingesetzt wird.

Steht eine Revision der Stutzen 2 an, so werden alle Sonden 4 in den außerhalb des Reaktordruckbehälters angeordneten, von den Stutzen wegführenden Führungsrohren 27 geparkt. Nachdem alle Komponenten des Reaktorkerns aus dem Reaktordruckbehälter entfernt sind, werden die Abschirmbehälter 6, 7, 8 und der mit Kassetten 19 bestückte Abschirmbehälter 9 in den Reaktordruckbehälter eingesetzt. Alle Sonden werden nun in die Rohre 15 der Abschirmbehälter 6, 7, 8 und der Kassette 19 des Abschirmbehälters 9 eingefahren, so daß ihre die Detektoren tragenden Endbereiche 5 in dem Abschirmbereich der Abschirmbehälter 6, 7, 8, 9 angeordnet sind. Durch Ausfahren einer Sonde 4 nach außerhalb des Reaktordruckbehälters und Freilegen des zugehörigen Schachtes 17 werden die Stutzen 2 des vom Abschirmbehälter 9 abgedeckten Viertelkreisquerschnittes nacheinander der erforderlichen Bearbeitung unterzogen. Danach wird der Abschirmbehälter 9 gegen einen Abschirmbehälter 6, 7 oder 8 vertauscht, um die Stutzen eines anderen Viertelkreissektors zu bearbeiten.

Wie die Figur 2 erkennen läßt, sind die Stutzen 2 eines Vierteilkreissektors des Bodens 3 nur teilweise symmetrisch zu den Stutzenpositionen eines anderen Viertelkreissektors. Der Boden 10a des Abschirmbehälters 9 weist daher soviele Schächte auf, daß alle Stutzen eines Viertelkreissektors mit dem gleichen Abschirmbehälter 9 bearbeitet werden können.

Der Reaktordruckbehälterquerschnitt kann auch in Abhängigkeit der Gegebenheiten im Reaktorgebäude von Abschirmbehältern mit einer anderen Aufteilung wie z. B. Zwei-, Drei-, Fünf- oder Sechs-Sektoren abgedeckt sein. Selbstverständlich ist auch der Einsatz eines einstückigen, den gesamten Reaktordruckbehälterquerschnitt übergreifenden Abschirmbehälters möglich. Dabei können für alle oder für einen Teil der Stutzen Schächte vorgesehen werden. Im letzteren Fall muß der gesamte Behälter verdreht werden, um alle Stutzen prüfen und/oder bearbeiten zu können.

Eine in der Figur 3 angedeutete Ausbildung sieht vor, daß von einem einzigen Schacht mehrere Stutzen übergriffen sind. So übergreift ein Schacht 17a zwei, ein Schacht 17b drei und ein Schacht 17c vier Stutzen 2. Ist einem Schacht 17a, 17b, 17c mehr als ein Stutzen 2 zugeordnet, so ist nur ein Stutzen durch Ausfahren der Sonde 4 der Bearbeitung zugänglich. Die Sonden der restlichen Stutzen sind in eine dem Schacht zugeordneten Abschirmung eingefahren. Dazu ist ein entsprechend im Querschnitt angepaßter Träger 22 vorzusehen. Auch die Abschirmkassetten können dem Querschnitt des jeweiligen Schachtes angepaßt werden.

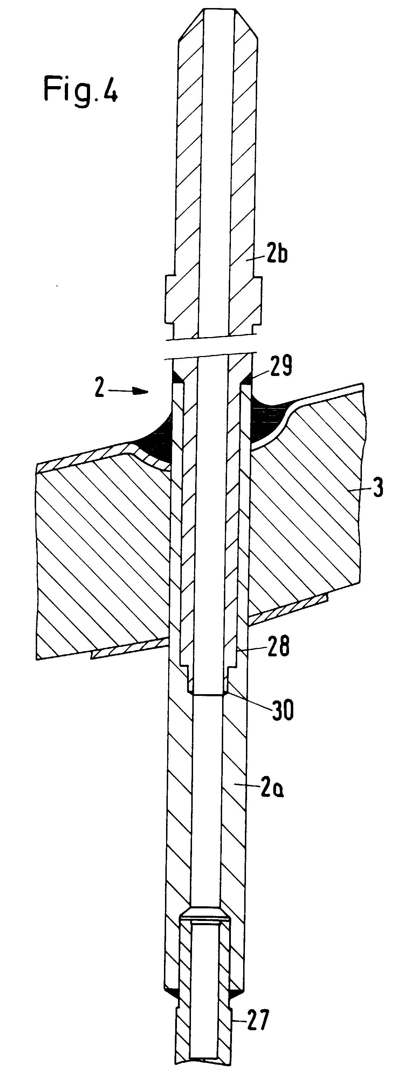

In der Figur 4 ist das Reparaturverfahren für einen weniger stark beschädigten Stutzen 2 dargestellt. Der verbrauchte Stutzen wird dicht oberhalb der Innenseite des Bodens 3 abgetrennt und das im Boden verbleibende Teil 2a zu einer zweistufigen Bohrung 28 erweitert. Ein in entsprechenden Stufen ausgeführter Stutzenteil 2b wird eingesetzt und über eine tragende Schweißnaht 29 mit dem im Boden 3 verbliebenen Stutzenteil 2a verbunden. Eine Dichtnaht 30 verhindert den Eintritt von Feuchtigkeit zwischen den ursprünglichen und dem neuen Stutzenteil. Damit wird eine eventuell bereits begonnene Spannungsrißkorrosion im ursprünglichen Stutzenteil gestoppt.

## Patentansprüche

1. Verfahren zum Prüfen, Reparieren oder Austauschen der den Boden (3) eines Reaktordruckbehälters (1) durchdringenden und der Einführung jeweils einer Sonde (4) einer Innenkerninstrumentierung eines wassergekühlten Kernreaktors dienenden Stutzen (2), **gekennzeichnet durch** folgende Schritte:
a. Einsetzen wenigstens eines Abschirmbehälters (6-9) in den Reaktordruckbehälter,
b. Einfahren aller Sonden der Innenkernistrumentierung in den Abschirmbereich des Abschirmbehälters,
c. Ausfahren wenigstens einer einem zu prüfenden bzw. zu bearbeitenden Stutzen zugeordneten Sonde nach außerhalb des Reaktordruckbehälters,
d. Freilegen eines durch den Abschirmbehälter erstreckten, streckten wenigstens einem Stutzen zugeordneten Schachtes (17),
e. Einführen der Prüfgeräte oder Werkzeuge durch den Schacht,
f. Durchführen der Prüf- und/oder Bearbeitungsvorgänge,
g. Ausfahren der Prüfgeräte oder der Werkzeuge aus dem Schacht,
h. Ahschirmen des Schachtes,
i. Einfahren der Sonde in den Abschirmbereich des Abschirmbehälters und
k. Wiederholen der Schritte c. bis i. für weitere Stutzen.

2. Verfahren nach Anspruch 1, dadurch gekennzeichnet, daß ein zu reparierender Stutzen (2) dicht oberhalb der Innenseite des Bodens (3) abgetrennt wird, daß der im Boden (3) verbleibende Stutzenteil (2a) stufenförmig aufgebohrt wird, daß ein in gleicher Weise stufenförmig ausgebildeter neuer Stutzenteil (2b) in die Stutzenbohrung (28) des verbleibenden Stutzenteils (2a) eingesetzt und über eine Schweißnaht (29) eine tragende Verbindung hergestellt wird, und daß am unteren Ende der Stufenbohrung eine Dichtschweißnaht (30) gelegt wird.

3. Vorrichtung zur Durchführung des Verfahrens nach Anspruch 1, dadurch gekennzeichnet, daß mehrere, zusammen den Querschnitt des Reaktordruckbehälters (1) ausfüllende, Abschirmbehälter (6, 7, 8, 9) mit ihrem Tragflansch (13) am Reaktordruckbehälter-Flansch (14) abgestützt sind, wobei die Bodenplatten (10, 10a) der Abschirmbehälter (6, 7, 8, 9) oberhalb der Stutzen (2) enden, daß die Bodenplatte (19a) wenigstens eines Abschirmbehälters (9) von mehreren Schächten (17) durchsetzt ist, die die im entsprechenden Teilquerschnitt des Reaktordruckbehälters befindlichen Stutzen (2) übergreifen, daß in jeden Schacht (17) eine wassergefüllte Kassette (19) einsetzbar ist, in deren oberhalb des jeweiligen Stutzens (2) endenden Boden (20) wenigstens ein Rohr (15) zur Aufnahme der Sonde (4) eingelassen ist, das mit seinem geschlossenen Ende ein vorgebbares Maß in die Kassette (19) hineinragt und mit seinem offenen Ende an den Stutzen (2) angrenzt, daß in der nicht von Schächten (17) durchsetzten Bodenplatte (10) der restlichen Abschirmbehälter (6, 7, 8) Rohre (15) zur Aufnahme der Sonden (4) eingelassen sind, die mit ihren geschlossenen Enden ein vorgebbares Maß in den Abschirmbehälter (6, 7, 8) ragen und mit ihren offenen Enden an die vom Abschirmbehälter abgedeckten Stutzen grenzen, und daß jeder Schacht (17) Mittel zur Führung eines im Schacht verfahrbaren Trägers (22) zur Aufnahme von Prüfgeräten und/oder Werkzeugen aufweist.

4. Vorrichtung nach Anspruch 3, dadurch gekennzeichnet, daß die Bodenplatte (10, 10a) und der Kassettenboden (20) auf einer an den zylindrischen Bereich der Reaktordruckbehälter-Wandung grenzenden Ebene liegen.

5. Vorrichtung nach Anspruch 3 oder 4, dadurch gekennzeichnet, daß die Mittel zur Führung des Trägers (22) dem unterhalb der jeweiligen Kassette (19) beginnenden Schachtbereich zugeordnet sind.

6. Vorrichtung nach einem der Ansprüche 3, 4 oder 5, dadurch gekennzeichnet, daß die Mittel zur Führung des Trägers (22) Schienen (21) sind, an denen der Träger (22) festklemmbar ist.

7. Vorrichtung nach einem der Ansprüche 3, 4, 5 oder 6, dadurch gekennzeichnet, daß zwischen dem Reaktordruckbehälter-Boden (3) und den Schächten (17) je ein Dichtelement (18) angeordnet ist.

## Claims

1. Method for testing, repairing or exchanging the nozzles (2) penetrating the bottom (3) of a reactor pressure vessel (1) and serving for the introduction in each case of a probe (4) of an in-core instrumentation of a water-cooled nuclear reactor, **characterized by** the following steps:
a. Inserting at least one shielding container (6-9) into the reactor pressure vessel,
b. Making all the probes of the in-core instrumentation enter the shielding region of the shielding container,
c. Withdrawing at least one probe, assigned to a nozzle to be tested or worked on, from the reactor pressure vessel,
d. Exposing a shaft (17) extending through the shielding container and assigned to at least one nozzle,
e. Introducing the testing devices or tools through the shaft,
f. Carrying out the testing and/or working operations,
g. Withdrawing the testing devices or the tools from the shaft,
h. Shielding the shaft,
i. Making the probe enter the shielding region of the shielding container and
k. Repeating steps c. to i. for further nozzles.

2. Method according to Claim 1, characterized in that a nozzle (2) to be repaired is cut off just above the inner side of the bottom (3), in that the nozzle part (2a) remaining in the bottom (3) is drilled open in a staged form, in that a new nozzle part (2b), designed in the same way in a staged form, is inserted into the nozzle bore (28) of the remaining nozzle part (2a) and a supporting connection is established by means of a weld seam (29), and in that a sealing weld seam (30) is applied at the lower end of the staged bore.

3. Apparatus for carrying out the method according to Claim 1, characterized in that a plurality of shielding containers (6, 7, 8, 9), together filling the cross-section of the reactor pressure vessel (1), are supported by their supporting flange (13) on the reactor pressure vessel flange (14), the bottom plates (10, 10a) of the shielding containers (6, 7, 8, 9) ending above the nozzles (2), in that the bottom plate (10a) of at least one shielding container (9) is passed through by a plurality of shafts (17), which engage over the nozzles (2) located in the corresponding partial cross-section of the reactor pressure vessel, in that into each shaft (17) a water-filled cartridge (19) can be inserted, in the bottom (20) of which, ending above the respective nozzle (2), there is inset at least one tube (15) for receiving the probe (4), which tube protrudes with its closed end by a predeterminable amount into the cartridge (19) and is adjacent with its open end to the nozzle (2), in that in the bottom plate (10) of the remaining shielding containers (6, 7, 8), which plate is not passed through by shafts (17), there are inset tubes (15) for receiving the probes (4), which tubes protrude with their closed ends by a predeterminable amount into the shielding containers (6, 7, 8) and are adjacent with their open end to the nozzles covered by the shielding container, and in that each shaft (17) has means for guiding a carrier (22) which can travel in the shaft and is intended for receiving testing devices and/or tools.

4. Apparatus according to Claim 3, characterized in that the bottom plate (10, 10a) and the cartridge bottom (20) lie on a level adjacent to the cylindrical region of the wall of the reactor pressure vessel.

5. Apparatus according to Claim 3 or 4, characterized in that the means for guiding the carrier (22) are assigned to the shaft region beginning below the respective cartridge (19).

6. Apparatus according to one of Claims 3, 4 or 5, characterized in that the means for guiding the carrier (22) are rails (21), on which the carrier (22) can be securely clamped.

7. Apparatus according to one of Claims 3, 4, 5 or 6, characterized in that a sealing element (18) is arranged in each case between the bottom (3) of the reactor pressure vessel and the shafts (17).

## Revendications

1. Procédé pour le contrôle, la réparation ou le remplacement des tubes-guides (2) qui traversent le fond (3) d'une cuve sous pression (1) d'un réacteur nucléaire et servent à la mise en place d'une sonde (4) faisant partie de l'instrumentation interne d'un réacteur nucléaire refroidi par eau, caractérisé par les étapes suivantes:
a. on dispose au moins une cuve de protection (6-9) dans la cuve sous pression du réacteur,
b. on amène toutes les sondes de l'intsrumentation interne du coeur dans la zone de protection de la cuve de protection,
c. on sort vers l'extérieur de la cuve sous pression du réacteur au moins une sonde associée à un tube-guide à contrôler ou à usiner,
d. on libère un puits (17) associé à au moins un tube-guide et s'étendant à travers la cuve de protection,
e. on introduit des appareils de contrôle ou des outils dans le puits,
f. on procède aux opérations de contrôle et/ou d'usinage,
g. on extrait les appareils de contrôle ou les outils du puits,
h. on protège le puits,
i. on amène la sonde dans la zone de protection de la cuve de protection et
k. on répète les étapes c à i pour d'autres tubes-guides.

2. Procédé selon la revendication 1, caractérisé par le fait que l'on tronçonne un tube-guide (2) à réparer juste au-dessus de la face supérieure du fond (3) , par le fait que l'on alèse en formant des gradins la partie (2a) du tube-guide restant dans le fond (3), par le fait que l'on introduit dans le trou (28) de la partie (2a) restante du tube-guide un nouveau tronçon (2b) de tube-guide étagé de la même manière et on réalise une liaison porteuse au moyen d'un cordon de soudure (29) et par le fait que l'on réalise un cordon de soudure (30) d'étanchéité à l'extrémité inférieure du trou étagé.

3. Dispositif pour la mise en oeuvre du procédé selon la revendication 1, caractérisé par le fait que plusieurs cuves de protection (6, 7, 8, 9) qui couvrent conjointement la totalité de la surface en section de la cuve sous pression (1) du réacteur prennent appui par leur collet (13) sur la virole (14) de la cuve sous pression du réacteur, les plaques de fond (10, 10a) des cuves de protection (6, 7, 8, 9) se terminant au-dessus des tubes-guides (2), par le fait que la plaque de fond (10a) d'au moins une cuve de protection (9) est percée de plusieurs puits (17) qui entourent les tubes-guides (2) situés dans la zone correspondante de la cuve sous pression du réacteur, par le fait que l'on place dans chaque puits (17) un caisson (19) rempli d'eau avec logé dans le fond (20) de celui-ci et se terminant au-dessus du tube-guide (2) concerné, au moins un tube (15) pour recevoir la sonde (4), dont l'extrémité fermée pénètre d'une certaine longueur dans le caisson (19) et dont l'extrémité ouverte est contiguë au tube guide (2), par le fait que des tubes (15) destinés à recevoir les sondes (4) sont montés dans la plaque de fond (10) des autres cuves de protection (6, 7, 8) non percées de puits (17), lesquels tubes, par leur extrémité fermée, pénètrent d'une certaine longueur dans les cuves de protection (6, 7, 8) et, par leur extrémité ouverte, sont contigus aux tubes-guides et par le fait que chaque puits (17) comporte des moyens de guidage d'un support (22) déplaçable à l'intérieur du puits et destiné à recevoir des appareils de contrôle et/ou des outils.

4. Dispositif selon la revendication 3, caractérisé par le fait que la plaque de fond (10, 10a) et le fond (20) du caisson sont disposés dans un plan voisin de la partie cylindrique de la paroi de la cuve sous pression du réacteur.

5. Dispositif selon la revendication 3 ou 4, caractérisé par le fait que les moyens de guidage du support (22) sont associés à la région du puits qui commence en-dessous du caisson (19) concerné.

6. Dispositif selon l'une des revendications 3, 4 ou 5, caractérisé par le fait que les moyens de guidage du support (22) sont des rails (21) auxquels le support (22) peut être fixé.

7. Dispositif selon l'une des revendications 3, 4, 5 ou 6, caractérisé par le fait qu'un élément d'étanchéité (18) est disposé chaque fois entre le fond (3) de la cuve sous pression du réacteur et les puits (17).
